# EUROPÄISCHE PATENTSCHRIFT

(11) **EP 3 599 500 B1**
(45) Veröffentlichungstag und Bekanntmachung des Hinweises auf die Patenterteilung: **04.08.2021**
(21) Anmeldenummer: 19179049.2
(22) Anmeldetag: 07.06.2019
(51) Int. Cl.: G02F 1/01, G02F 1/29, G01N 21/53

(54) **STRAHLNACHFÜHRVORRICHTUNG, OPTISCHE ANORDNUNG UND ANALYSEVORRICHTUNG**
BEAM TRACKING DEVICE, OPTICAL ASSEMBLY AND ANALYSIS DEVICE
DISPOSITIF DE GUIDAGE DU FAISCEAU, AGENCEMENT OPTIQUE ET DISPOSITIF D'ANALYSE

(30) Priorität: 23.07.2018 DE 102018117753
(43) Veröffentlichungstag der Anmeldung: 29.01.2020
(73) Patentinhaber: SICK AG, 79183 Waldkirch (DE)
(72) Erfinder: ECCARDT, Simon, 79346 Endingen (DE)
(74) Vertreter: Manitz Finsterwald Patent- und Rechtsanwaltspartnerschaft mbB

(56) Entgegenhaltungen:
- EP-A2- 0 230 726
- WO-A2-2018/106295
- GB-A- 2 215 071
- JP-A- S6 141 131
- JP-A- 2005 091 889
- JP-A- 2016 161 598
- US-A- 4 654 803
- US-A- 4 762 383
- US-A1- 2014 334 506
- PERPIÑÀ X ET AL: "Internal infrared laser deflection system: a tool for power device characterization; Internal infrared laser deflection system: a tool for power device characterization", MEASUREMENT SCIENCE AND TECHNOLOGY, IOP, BRISTOL, GB, Bd. 15, Nr. 5, 1. Mai 2004 (2004-05-01), Seiten 1011-1018, XP020066532, ISSN: 0957-0233, DOI: 10.1088/0957-0233/15/5/034
- GRUSS C ET AL: "Effects of optothermal nonlinearities on photothermal beam deflection", JOURNAL OF APPLIED PHYSICS, AMERICAN INSTITUTE OF PHYSICS, US, Bd. 85, Nr. 8, 15. April 1999 (1999-04-15) , Seiten 4176-4183, XP012047074, ISSN: 0021-8979, DOI: 10.1063/1.370328

## Beschreibung

Die vorliegende Erfindung betrifft eine Strahlnachführvorrichtung zur Nachführung eines Lichtstrahls in einer optischen Anordnung, mit einer Ablenkeinheit, welche dazu eingerichtet ist, die Ausbreitungsrichtung des Lichtstrahls zu ändern, einem ortsauflösenden Lichtdetektor zum Erfassen zumindest eines Teils des Lichtstrahls, und einer mit der Ablenkeinheit und dem Lichtdetektor verbundenen Steuereinheit, welche dazu eingerichtet ist, auf der Grundlage von durch den Lichtdetektor erzeugten Detektorsignalen eine Abweichung einer Auftreffposition des Lichtflecks von einer Sollposition zu ermitteln und die Ablenkeinheit auf der Grundlage der ermittelten Abweichung derart anzusteuern, dass die Abweichung der Auftreffposition des Lichtflecks von der Sollposition kompensiert wird.

Unter einem Lichtstrahl wird in diesem Zusammenhang ein Strahl oder genauer ein Strahlenbündel verstanden, welches auf einem Lichtempfänger einen Lichtfleck erzeugt und zumindest im Bereich der Ablenkeinheit einen gewissen Querschnitt bzw. eine laterale Ausdehnung aufweist. Unter dem Begriff "Licht" wird hier nicht nur sichtbares Licht, d.h. für das menschliche Auge sichtbare elektromagnetische Strahlung, verstanden, sondern jegliche Form von optischer Strahlung, d.h. insbesondere auch ultraviolettes oder infrarotes Licht subsumiert.

Bei optischen Anordnungen, bei denen ein Lichtsender zum Aussenden eines Lichtstrahls und ein Lichtempfänger zum Empfangen des ausgesendeten Lichtstrahls vorgesehen sind, besteht ein häufig auftretendes Problem darin, dass aufgrund von Umgebungseinflüssen die Auftreffposition des Lichtstrahls auf den Lichtempfänger von einer Sollposition abweicht. Dies kann dazu führen, dass der Lichtstrahl nicht mehr vollständig oder überhaupt nicht mehr von dem Lichtempfänger erfasst wird, was in der Regel eine Fehlfunktion oder sogar einen vollständigen Ausfall der optischen Anordnung zur Folge hat.

Optische Anordnungen der genannten Art weisen zumeist mehrere optische Elemente wie Linsen, Spiegelprismen, Reflektoren oder dergleichen auf, die dazu dienen, den ausgesendeten Lichtstrahl zu formen oder in sonstiger Weise zu beeinflussen und in Richtung des Lichtempfängers zu lenken und insbesondere zu fokussieren. Verschiedene Umgebungseinflüsse, insbesondere thermische Einflüsse, die ihre Ursache innerhalb oder außerhalb der optischen Anordnung haben können, können mechanische Spannungen erzeugen, welche zu einem Verziehen der optischen Anordnung führen, d.h. zu einer Relativverschiebung und/oderverkippung der verschiedenen Elemente der optischen Anordnung. Insbesondere bei einem großen Abstand zwischen dem Lichtsender und dem Lichtempfänger können bereits kleine mechanische Spannungen zu einer merklichen Verschiebung der Auftreffposition des Lichtstrahls auf dem Lichtempfänger führen.

Um die Funktion der optischen Anordnung aufrechtzuerhalten, wird bei gattungsgemäßen Strahlnachführvorrichtungen eine hier als Ablenkeinheit bezeichnete Baugruppe vorgesehen, welche die Ausbreitungsrichtung des Lichtstrahls beeinflussen kann. Aufgrund einer ermittelten Abweichung der Auftreffposition von der Sollposition kann eine die genannten Umgebungseinflüsse kompensierende Ansteuerung der Ablenkeinheit durchgeführt werden, so dass der von einem Lichtstrahl erzeugte Lichtfleck wieder an seiner Sollposition auf den Lichtempfänger trifft.

Optische Anordnungen, die von der vorstehend genannten Problematik betroffen sind und bei denen eine Strahlnachführvorrichtung zum Einsatz gelangen kann, sind insbesondere Lichtschranken, Lichtgitter oder andere optische Sensoren oder Detektoren, zum Beispiel optische Gasanalysevorrichtungen, wobei diese Aufzählung von optischen Anordnungen nicht abschließend ist.

Allgemein bekannt sind Ablenkeinheiten, bei denen ein optisches Element, in der Regel ein Spiegel, mittels Aktoren wie Schrittmotoren, Tauchspulen, Dehnstoffelementen oder Magneten um eine oder mehrere Achsen verkippt wird.

Derartige Ablenkeinheiten sind aufgrund ihrer mechanisch wirkenden Komponenten konstruktiv sehr aufwendig und teuer. Darüber hinaus unterliegen sie einer begrenzten Lebensdauer. Zudem sind mechanische Lösungen stets mit fertigungstechnischen Toleranzen behaftet, so dass die für eine exakte Nachführung des Lichtstrahls auf seine Sollposition erforderliche Genauigkeit nicht erreicht werden kann.

Eine Strahlnachführvorrichtung mit den Merkmalen des Oberbegriffes des Anspruchs 1 ist in US 2014/334506 A1 beschrieben. JP 2005 091889 A offenbart weiteren Stand der Technik.

Es ist die Aufgabe der vorliegenden Erfindung, eine Strahlnachführvorrichtung zu schaffen, welche eine zuverlässige, kostengünstige und präzise Strahlnachführung eines Lichtstrahls in einer optischen Anordnung ermöglicht.

Die Lösung der Aufgabe erfolgt durch eine Strahlnachführvorrichtung mit den Merkmalen des Anspruchs 1. Erfindungsgemäß ist vorgesehen, dass die Ablenkeinheit ein optisches Element und eine mit dem optischen Element gekoppelte thermische Einrichtung umfasst, wobei die thermische Einrichtung dazu eingerichtet ist, das optische Element lokal zu kühlen und/oder zu heizen, um in dem optischen Element einen quer zu der Ausbreitungsrichtung des Lichtstrahls verlaufenden Temperaturgradienten zu erzeugen, welcher in dem optischen Element einen entsprechend verlaufenden Gradienten der optischen Weglänge, die der Lichtstrahl in dem optischen Element durchläuft, bewirkt, so dass sich die Ausbreitungsrichtung des Lichtstrahls um ein gewünschtes Maß und/oder in eine gewünschte Richtung ändert.

Bei dem optischen Element kann die optische Weglänge für unterschiedliche Teillichtpfade in Abhängigkeit von der Position eines Schnittpunkts eines jeweiligen Teillichtpfads mit einer quer zur Ausbreitungsrichtung verlaufenden Ebene, beispielsweise der Lichteintritts- oder Lichtaustrittsfläche des optischen Elements beeinflusst werden. Der Lichtstrahl verteilt sich aufgrund seines nicht punktförmigen Querschnitts auf mehrere dieser Teillichtpfade, so dass Teillichtstrahlen des Lichtstrahls entsprechend den Gradienten unterschiedliche optische Weglängen in dem optischen Element zurücklegen. Die genannten Gradienten müssen nicht notwendigerweise stetig verlaufen, sondern können auch einen stufenförmigen Verlauf aufweisen.

Das optische Element ändert durch die gradientenartige Variation der optischen Weglänge insbesondere die Ausbreitungsrichtung der Wellenfront des Lichtstrahls und bewirkt über seine gesamte Lichteintritts- bzw. Lichtaustrittsfläche betrachtet sozusagen eine Lichtbrechung, so dass der Lichtstrahl eine gewünschte Änderung seiner Ausbreitungsrichtung erfährt. Der Öffnungswinkel des Lichtstrahls bleibt in der Regel unbeeinflusst, d.h. ein Bündel von parallel in das optische Element eintretenden Teilstrahlen tritt auch als paralleles Bündel wieder aus.

Die genannte Sollposition kann eine Sollposition auf dem Lichtdetektor oder eine Sollposition auf einem gegebenenfalls zusätzlich vorhandenen Lichtempfänger der optischen Anordnung sein, wobei im letzteren Fall die Sollpositionen auf dem Lichtempfänger und dem Lichtdetektor zueinander korrespondieren können. Unter einem Kompensieren der Abweichung der Auftreffposition des Lichtflecks von der Sollposition wird beispielsweise eine vollständige oder zumindest annähernd vollständige Korrektur einer durch Umweltbedingungen oder Justierfehler bedingte Positionsabweichung von der Sollposition verstanden.

Die Änderung der optischen Weglänge in dem optischen Element erfolgt mittels einer durch Temperaturänderungen bedingten Änderung des lokalen Brechungsindex, d.h. der Phasengeschwindigkeit des Lichts für einen bestimmten optischen Weg und/oder der lokalen geometrischen Weglänge. Mit anderen Worten kann der Gradient der optischen Weglänge einem Gradienten des lokalen Brechungsindex und/oder einem Gradienten der lokalen geometrischen Weglänge entsprechen.

Das Ansteuern der Ablenkeinheit durch die Steuereinheit erfolgt insbesondere dadurch, dass die thermische Einrichtung durch die Steuereinheit gesteuert wird. Hierfür können die Steuereinheit, die thermische Einrichtung und der ortsauflösende Lichtdetektor als Regelkreis ausgebildet sein. Die Strahlnachführung erfolgt somit bevorzugt nach Art eines Regelkreises.

Der Vorteil der erfindungsgemäßen Strahlnachführvorrichtung besteht darin, dass keine beweglichen Teile notwendig sind. Somit kann auf eine kostenintensive und fehleranfällige Mechanik verzichtet werden. Da die Ansteuerung auf der Grundlage der ermittelten Auftreffposition des Lichtflecks auf dem Lichtdetektor erfolgt, ist auch der Justieraufwand bzw. die notwendige Präzision bei einer erstmaligen Justage oder einer Inbetriebnahme der Ablenkeinheit innerhalb der optischen Anordnung gering, da diese Aufgabe durch die Steuereinheit übernommen werden kann.

Bei der erfindungsgemäßen Strahlnachführungsvorrichtung ist das optische Element als ein Array von zueinander parallel verlaufenden optischen Fasern, gemäß einer vorteilhaften Ausführungsform als optische Faserplatte, ausgebildet. Die Fasern werden durch die von der thermischen Einrichtung erzeugten Temperaturänderungen z.B. gestreckt oder gestaucht. Die optischen Weglängen werden aber nicht zwingend individuell für jede einzelne Faser beeinflusst. Jede Faser des Arrays verzögert die Ausbreitung der Wellenfrontkomponenten um ein bestimmtes Maß. Die einzelnen, durch eine jeweilige Faser transportierten Wellenfrontenkomponenten setzen sich nach dem Austritt aus dem Array zu einer Gesamtwellenfront zusammen, deren Ausbreitungsrichtung um das gewünschte Maß von der Ausbreitungsrichtung der eintretenden Gesamtwellenfront abweicht. tungsrichtung der eintretenden Gesamtwellenfront abweicht. Anstelle eines Arrays von optischen Fasern kann auch ein monolithisches Element, ein Mikrolinsenarray oder ein Flüssigkristallarray verwendet werden.

Vorteilhafterweise wird die thermische Einrichtung derart angesteuert, dass der Gradient der optischen Weglänge entlang einer Geraden verläuft, welche quer zu der Ausbreitungsrichtung des Lichtstrahls verläuft. Dadurch wird insbesondere gewährleistet, dass der Lichtstrahl lediglich gegenüber einer optischen Achse der Ablenkeinheit bzw. der Strahlnachführvorrichtung verkippt wird und nicht anderweitig beeinflusst, verzerrt oder verformt wird. Das optische Element wirkt sozusagen als optischer Keil oder als Prisma.

Gemäß einer weiteren vorteilhaften Ausführungsform umfasst die thermische Einrichtung mehrere thermische Elemente, welche entlang einer Umfangsfläche des optischen Elements angeordnet sind. Unter der Umfangsfläche oder Mantelfläche wird insbesondere eine Fläche des optischen Elements verstanden, welche nicht als Lichteintritts- oder Lichtaustrittsfläche fungiert. Thermische Elemente sind insbesondere Heiz- und/oder Kühlelemente. Durch eine geeignete Ansteuerung einer oder mehrerer thermischer Elemente kann der Lichtstrahl in jeden gewünschten Azimutwinkel (hier: Winkel zwischen einer Verbindungslinie zwischen den (gedachten) Schnittpunkten einer senkrecht zum Lichtstrahl verlaufenden (gedachten) Ebene mit dem ursprünglichen und dem abgelenkten Lichtstrahl und einer gleichfalls in dieser Ebene verlaufenden Referenzlinie) abgelenkt werden, wobei der Elevationswinkel (hier: Winkel zwischen dem ursprünglichen und dem abgelenkten Lichtstrahl), welcher das Maß der Ablenkung beschreibt, durch die Höhe der thermischen Leistungen der jeweiligen thermischen Elemente gesteuert werden kann.

Vorteilhafterweise umfasst die thermische Einrichtung wenigstens vier thermische Elemente, welche entlang der Umfangsfläche des optischen Elements in Umfangsrichtung verteilt, insbesondere mit gleichen Abständen zueinander, angeordnet sind. Insbesondere sind die thermischen Elemente in einer orthogonalen Anordnung angeordnet, bei welcher sich jeweils zwei thermische Elemente einander gegenüberliegen und gedachte Verbindungslinien der jeweils einander gegenüberliegenden thermischen Elemente senkrecht zueinander verlaufen. Durch eine geeignete Ansteuerung, bei welcher die thermische Leistung geeignet auf beide Paare verteilt wird, kann der Lichtstrahl in alle Azimutwinkel abgelenkt werden.

Es hat sich als vorteilhaft erwiesen, wenn zumindest ein Teil der thermischen Elemente als Heizelemente oder als Kühlelemente, insbesondere als Peltier-Elemente ausgebildet ist. Insbesondere können die thermischen Elemente nur als Heizelemente, nur als Kühlelemente oder der eine Teil als Heizelemente und der andere Teil als Kühlelemente ausgebildet sein. Grundsätzlich können auch kombinierte Heiz-/Kühlelemente eingesetzt werden, die wahlweise als Heizer oder als Kühler betrieben werden können, z.B. Peltier-Elemente.

Der ortsaufgelöste Lichtdetektor kann vorteilhafterweise als Vierquadrantenempfänger ausgebildet sein. Ein Vierquadrantenempfänger ist ein Lichtempfänger mit vier als 2 x 2-Matrix angeordneten lichtempfindlichen Flächen, wobei für jede lichtempfindliche Fläche eine der auftreffenden Lichtintensität entsprechendes Empfangssignal erzeugt werden kann. Durch geeignete Differenzbildung zwischen den Empfangssignalen der einzelnen Flächen kann eine Auftreffposition eines auftreffenden Lichtflecks ermittelt werden. Die Sollposition entspricht in der Regel einer Auftreffposition, bei der alle lichtempfindlichen Flächen gleichmäßig beleuchtet werden, so dass die Signaldifferenzen zwischen verschiedenen lichtempfindlichen Flächen gleich Null ist. Wenn die Auftreffposition von dieser Sollposition abweicht, verändern sich die jeweiligen Differenzen, je nach Richtung der Abweichung in unterschiedlicher Weise. Grundsätzlich können jedoch auch andere geeignete Sensoren als ortsauflösende Lichtdetektoren eingesetzt werden, beispielsweise Detektoren oder Sensoren mit einer N x M-Matrix von lichtempfindlichen Elementen (z.B. CCD- oder CMOS-Bildsensoren) oder auch Zeilensensoren, wenn eine zu erwartende Abweichung der Auftreffposition von der Sollposition nur in einer bestimmten Richtung auftritt.

Gemäß einer weiteren vorteilhaften Ausführungsform ist in der Ausbreitungsrichtung des Lichtstrahls betrachtet hinter der Ablenkeinheit ein Strahlteiler vorgesehen, welcher einen Teil des Lichtstrahls auskoppelt und auf den Lichtdetektor lenkt. Bei dieser Ausgestaltung kann die Strahlnachführvorrichtung als ein separates, insbesondere auch nachzurüstendes Modul in eine vorhandene optische Anordnung eingebracht werden, ohne dass die Funktion der optischen Anordnung wesentlich beeinträchtigt wird. Der nicht durch den Strahlteiler ausgekoppelte Teil des Lichtstrahls trifft weiterhin auf einen vorhandenen Lichtempfänger der optischen Anordnung, welcher dadurch insbesondere auch als nicht ortsauflösender Lichtempfänger ausgebildet sein kann.

Die vorliegende Erfindung betrifft ferner eine optische Anordnung mit zumindest einem Lichtsender zum Aussenden eines Lichtstrahls, zumindest einem Lichtempfänger zum Empfangen des Lichtstrahls und zumindest einer Strahlnachführvorrichtung nach einer der vorstehend genannten Ausführungsformen, welche in einem Lichtlaufweg des Lichtstrahls zwischen dem Lichtsender und dem Lichtempfänger angeordnet ist. Die Strahlnachführung kann in der Nähe des Lichtsenders oder des Lichtempfängers oder auch in einer beliebigen Zwischenposition angeordnet sein. Die Strahlnachführvorrichtung führt den Lichtstrahl auf eine Sollposition auf dem Lichtempfänger nach. Die optische Anordnung kann beispielsweise ein optischer Detektor, eine Gasanalysevorrichtung, ein Fotometer, eine Lichtschranke, ein Lichtgitter oder eine sonstige optische Anordnung sein.

Vorteilhafterweise ist der Lichtempfänger zugleich als Lichtdetektor ausgebildet. Mit anderen Worten wird der Lichtdetektor zugleich als Lichtempfänger betrieben und umgekehrt. Somit sind der Lichtdetektor und der Lichtempfänger identisch zueinander. Der Vorteil besteht darin, dass kein Intensitätsverlust, der durch eine Aufteilung der Lichtintensität zwischen Lichtdetektor und Lichtempfänger mittels eines Strahlteilers verursacht wird, die Nutzempfindlichkeit der optischen Anordnung beeinträchtigt.

Die vorliegende Erfindung betrifft weiterhin eine Analysevorrichtung zum Analysieren einer Gasprobe mit einer die Gasprobe aufnehmenden Konzentrationsmessstrecke, und einer optischen Anordnung nach einer der vorstehend genannten Ausführungsformen, wobei der Lichtsender zum Aussenden des Lichtstrahls in die Konzentrationsmessstrecke und der Lichtempfänger zum Empfangen des aus der Konzentrationsmessstrecke austretenden Lichtstrahls eingerichtet sind. Die Analysevorrichtung umfasst weiterhin eine Auswerteeinheit, welche dazu ausgelegt ist, auf der Grundlage der Intensität des von dem Lichtempfänger empfangenen Lichtstrahls und der Länge der Konzentrationsmessstrecke die Konzentration zumindest eines in der Gasprobe vorhandenen Stoffes zu ermitteln.

Die Stoffkonzentration wird anhand der Dämpfung der von dem Lichtsender ausgesendeten Lichtsignale ermittelt. Der Lichtsender und der Lichtempfänger können auf derselben Seite oder auf verschiedenen Seiten der Konzentrationsmessstrecke angeordnet sein. Sofern sich Lichtsender und Lichtempfänger auf derselben Seite der Konzentrationsmessstrecke befinden, ist zusätzlich ein Reflektor vorgesehen, welcher die ausgesendeten Lichtsignale nach einem Durchqueren eines Teils der Konzentrationsmessstrecke in Richtung auf den Lichtempfänger reflektiert, so dass die reflektierten Lichtsignale den anderen Teil der Konzentrationsmessstrecke durchqueren.

Bei der Gasprobe kann es sich zum Beispiel um einen in einem Strömungskanal strömenden Gasstrom oder auch um ein in einem Behältnis aufgenommenes Gasvolumen handeln. Die Konzentrationsmessstrecke muss nicht zwingend den gesamten Querschnitt des Strömungskanals bzw. des Behältnisses durchmessen, sondern kann sich auch nur teilweise, z.B. von einer Wandung aus in den Strömungskanal bzw. in das Verhältnis hinein erstrecken.

Derartige Analysevorrichtungen dienen beispielsweise zur Bestimmung der Konzentration von Gasen oder Feststoffpartikeln in industriellen Abgasschornsteinen, zur Fackelgasüberwachung oder zur Dampfrückgewinnungsüberwachung und sind oftmals in besonderer Weise thermischen Einflüssen ausgesetzt. Zudem kann die Konzentrationsmessstrecke sehr lang sein und mehrere Meter betragen, so dass hier bereits geringfügige Abweichungen des Sendelichtstrahls von seiner Sollrichtung zu Intensitätseinbußen auf dem Lichtempfänger führen können. Daher profitieren Gasanalysevorrichtungen in besonderer Weise von der erfindungsgemäßen Strahlnachführvorrichtung.

Weitere vorteilhafte Ausführungen der Strahlnachführvorrichtung, der optischen Anordnung und/oder der Gasanalysevorrichtung ergeben sich aus den Unteransprüchen, der Beschreibung und den Zeichnungen.

Die Erfindung wird nachfolgend anhand von Ausführungsbeispielen mit Bezug auf die Zeichnungen beschrieben. Es zeigen:
- Fig. 1: eine schematische Darstellung einer beispielhaften Ablenkeinheit für eine Strahlnachführvorrichtung;
- Fig. 2: eine schematische Darstellung einer optischen Anordnung mit einer Strahlnachführvorrichtung gemäß einem ersten Ausführungsbeispiel; und
- Fig. 3: eine schematische Darstellung einer optischen Anordnung mit einer Strahlnachführvorrichtung gemäß einem zweiten Ausführungsbeispiel.

Im Folgenden werden gleiche oder gleichartige Elemente jeweils mit demselben Bezugszeichen bezeichnet.

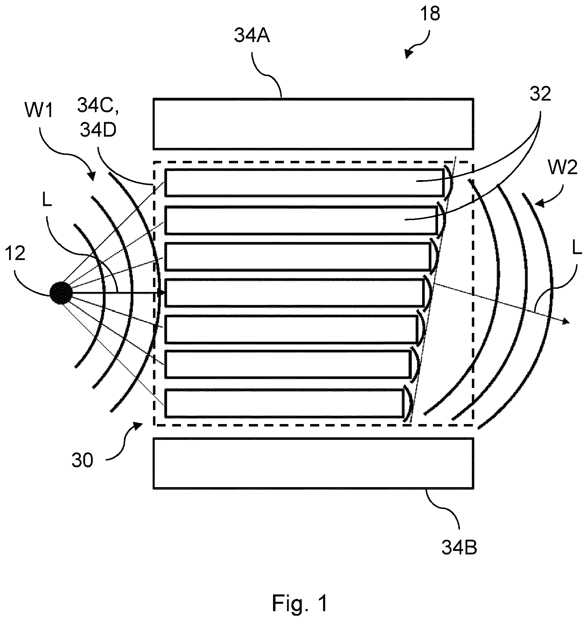

Fig. 1 zeigt eine schematische und vereinfachte Darstellung einer Ablenkeinheit für eine erfindungsgemäße Strahlnachführvorrichtung. Die in einer Seitenansicht gezeigte Ablenkeinheit 18 umfasst ein als optische Faserplatte ausgebildetes optisches Element 30, welches eine Vielzahl von parallel verlaufenden optischen Fasern 32 umfasst.

Der Querschnitt des optischen Elements 30 ist von einer Lichteintritts- bzw. Lichtaustrittsfläche aus betrachtet rechteckig oder quadratisch, so dass das optische Element entlang seines Umfangs von vier Umfangsflächen begrenzt ist. An jeder Umfangsfläche ist ein jeweiliges thermisches Element 34A bis 34D angeordnet. Die thermischen Elemente 34A bis 34D bilden eine thermische Einrichtung.

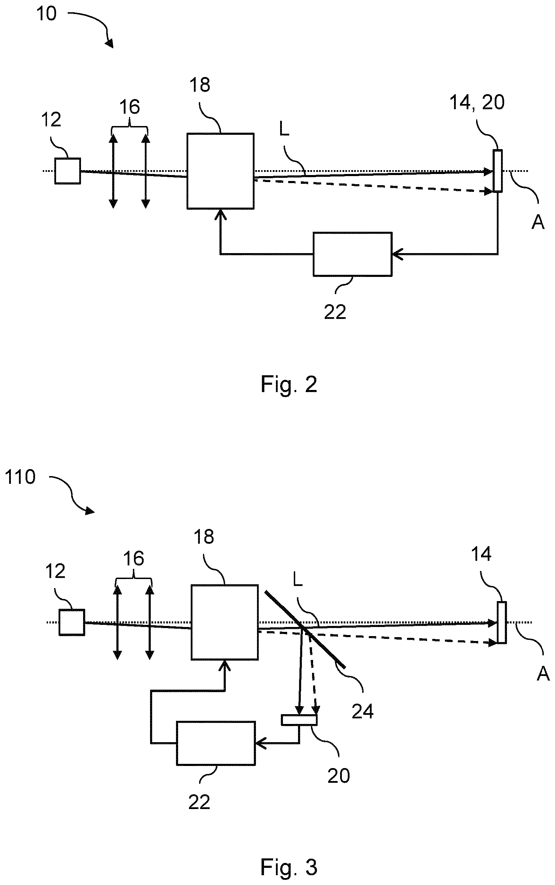

Die thermischen Elemente 34A bis 34D können jeweils als Heizelement, als Kühlelement oder als kombiniertes Heiz-/Kühlelement ausgebildet sein. Die thermischen Elemente 34A bis 34D werden durch eine Steuereinheit 22 (Fig. 2 und 3) angesteuert, welches es ermöglicht, die Heiz- und/oder Kühlleistung der thermischen Elemente 34A bis 34D zu steuern bzw. zu regeln.

In der in Fig. 1 dargestellten Konfiguration kann die Ansteuerung der thermischen Elemente 34A bis 34D beispielsweise derart erfolgen, dass das thermische Element 34A das optische Element 30 heizt, während das gegenüberliegende thermische Element 34B das optische Element 30 kühlt. Die thermischen Elemente 34C, 34D werden derart angesteuert, dass sie die Temperatur des optischen Elements 30 nicht beeinflussen.

Wie in Fig. 1 gut zu erkennen ist, entsteht durch das Heizen bzw. Kühlen des optischen Elements 30 auf einander gegenüberliegenden Seiten ein thermischer Gradient, der zur Folge hat, dass sich die geometrische Länge der optischen Fasern 32 von der dem thermischen Element 34A zugewandten Seite in Richtung zu der dem thermischen Element 34D zugewandten Seite des optischen Elements 30 zunehmend verringert, wobei das Maß der Längenänderung in der Darstellung von Fig. 1 zum besseren Verständnis übertrieben dargestellt ist. Außerdem kann der thermische Gradient auch eine entlang eines Gradienten verlaufende Änderung des Brechungsindex bzw. der Phasengeschwindigkeit in den optischen Fasern 32 zur Folge haben.

Wie in Fig. 1 gut zu erkennen ist, tritt eine von einem Lichtsender 12 erzeugte Wellenfront 1 in das optische Element 30 ein. Dadurch wird die Wellenfront W1 in mehrere Teilwellenfronten aufgespalten, die sich durch die einzelnen optischen Fasern 32 ausbreiten. Aufgrund des thermisch erzeugten Gradienten der optischen Weglänge erfolgt der Austritt der Teilwellenfronten mit einer sich entlang des Gradienten ändernden zeitlichen Verzögerung. Die sich aus den austretenden Teilwellenfronten zusammensetzende gesamte austretende Wellenfront W2 wird dadurch in ihrer Ausbreitungsrichtung abgelenkt, was auch durch einen mittig verlaufenden Pfeil verdeutlicht wird, welcher einen Lichtstrahl L repräsentiert.

Sinnvollerweise sind der Querschnitt des Lichtstrahls L oder Strahlenbündels beim Eintritt in das optische Element 30 und die Querschnitte der optischen Fasern 32 so aufeinander abgestimmt, dass der Lichtstrahl L bzw. das Strahlenbündel eine Vielzahl von optischen Fasern 32 durchstrahlt.

Die Anordnung der thermischen Elemente 34A bis 34D und deren Auslegung als kombinierte Heiz-/Kühlelemente sind hier lediglich beispielhaft. Wie vorstehend bereits erwähnt, können auch mehr oder weniger als vier thermische Elemente 34A bis 34D vorgesehen werden. Auch die beschriebene Ansteuerung ist nur beispielhaft.

Weiterhin können gemäß einer Abwandlung die thermischen Elemente auch in das optische Element 30 integriert sein, so dass insbesondere einzelnen oder Teilgruppen von optischen Fasern 32 ein jeweiliges thermisches Element zugeordnet ist. Dadurch können die optischen Weglängen der einzelnen optischen Fasern 32 noch gezielter beeinflusst werden.

In Fig. 2 ist eine optische Anordnung 10 dargestellt, welche einen Lichtsender 12 zum Aussenden eines Lichtstrahls L und einen Lichtempfänger 14 zum Empfangen des Lichtstrahls L aufweist. Die optische Anordnung 10 kann ferner strahlformende Linsen 16 und ggf. weitere Elemente umfassen. Wie in Fig. 2 gut zu erkennen ist, breitet sich der Lichtstrahl L nicht entlang einer optischen Achse A aus, was für ein Auftreffen auf dem Lichtempfänger 14 in einer Sollposition erforderlich wäre, sondern weicht mit einem kleinen Elevationswinkel von der optischen Achse A ab. Ohne eine Kompensation oder Korrektur dieser Abweichung würde der Lichtstrahl L in einem Randbereich des Lichtempfängers 14 auftreffen, was durch eine gestrichelt dargestellte Pfeillinie verdeutlicht wird.

Zur Kompensation dieser Abweichung ist eine Strahlnachführvorrichtung vorgesehen, welche einen ortsauflösenden Lichtdetektor 20, die vorstehend beschriebene Ablenkeinheit 18 und eine Steuereinheit 22 umfasst, welche mit dem Lichtdetektor 20 und der Ablenkeinheit 18 verbunden ist.

Der Lichtempfänger 14 und der Lichtdetektor 20 werden in diesem Ausführungsbeispiel durch dasselbe Bauteil gebildet.

Die Steuereinheit 22 ist dazu eingerichtet, auf der Grundlage der von dem Lichtdetektor 20 empfangenen Detektorsignale eine Abweichung der Auftreffposition eines durch den Lichtstrahl L erzeugten Lichtflecks auf dem Lichtdetektor 20 zu ermitteln. Aufgrund der ermittelten Abweichung steuert die Steuereinheit 22 die Ablenkeinheit 18 derart an, dass der Lichtstrahl L so abgelenkt wird, dass er in der Sollposition auf den Lichtempfänger 14 bzw. den Lichtdetektor 20 auftrifft. Sollte sich die Abweichung des Lichtstrahls L von seiner vorgegebenen Ausbreitungsrichtung mit der Zeit durch thermische oder andere Umgebungseinflüsse erneut ändern, kann die Steuereinheit diese Änderungen nachregeln, so dass der Lichtstrahl L bzw. der hierdurch erzeugte Lichtfleck stets in der Sollposition auf den Lichtempfänger 14 bzw. den Lichtdetektor 20 auftrifft.

In Fig. 3 ist eine optische Anordnung 110 gemäß einem weiteren Ausführungsbeispiel dargestellt, welche ähnlich wie die optische Anordnung 10 (Fig. 2) aufgebaut ist. Anstelle eines kombinierten Lichtempfängers/Lichtdetektors 14, 20 sind der Lichtempfänger 14 und der Lichtdetektor 20 als separate Bauteile ausgeführt.

An der Lichtaustrittsseite der Ablenkeinheit 18 ist ein Strahlteiler 24 vorgesehen, welcher einen Teil des austretenden Lichts in Richtung des Lichtdetektors 20 umlenkt. Das Teilungsverhältnis des Strahlteilers 24 kann so gewählt werden, dass der größere Teil der Lichtintensität auf den Lichtempfänger 14 trifft. Der Lichtempfänger 14, der Lichtdetektor 20 und der Strahlteiler 24 sind relativ zueinander derart ausgerichtet, dass ein Lichtstrahl L, der in einer Sollposition auf den Lichtempfänger 14 auftrifft, zugleich auch in einer Sollposition auf den Lichtdetektor 20 auftrifft. Mit anderen Worten entsprechen die Sollpositionen auf dem Lichtempfänger 14 und dem Lichtdetektor 20 einander.

Ein Vorteil der optischen Anordnung 110 gemäß Fig. 3 besteht darin, dass die Strahlnachführvorrichtung, welche die Ablenkeinheit 18, die Steuereinheit 22, den Lichtdetektor 20 und gegebenenfalls auch den Strahlteiler 24 umfasst, unabhängig von den übrigen Komponenten der optischen Anordnung 110 im Strahlengang angeordnet werden kann. Beispielsweise kann die Strahlnachführvorrichtung als ein Modul ausgestaltet sein, welches wahlweise in eine vorhandene optische Anordnung integriert werden kann.

Mit der erfindungsgemäßen Strahlnachführvorrichtung ist eine kostengünstige und einfach zu justierende Möglichkeit einer Strahlnachführung zur Kompensation von insbesondere thermisch bedingten Dejustierungen in einer optischen Anordnung möglich. Da die zu kompensierenden Abweichungen sich zumeist nur langsam ändern, ist die aufgrund der thermischen Einrichtung nur relativ langsame Nachführgeschwindigkeit völlig ausreichend.

### Bezugszeichenliste

- 10, 110: optische Anordnung
- 12: Lichtsender
- 14: Lichtempfänger
- 16: Linse
- 18: Ablenkeinheit
- 20: Lichtdetektor
- 22: Steuereinheit
- 24: Strahlteiler
- 30: optisches Element
- 32: optische Faser
- 34A - 34D: thermisches Element

- A: optische Achse
- L: Lichtstrahl
- W1, W2: Wellenfront

## Patentansprüche

1. Strahlnachführvorrichtung zur Nachführung eines Lichtstrahls (L) in einer optischen Anordnung (10, 110), mit
einer Ablenkeinheit (18), welche dazu eingerichtet ist, die Ausbreitungsrichtung des Lichtstrahls (L) zu ändern,
einem ortsauflösenden Lichtdetektor (14, 20) zum Erfassen zumindest eines Teils des Lichtstrahls (L), und
einer mit der Ablenkeinheit (18) und dem Lichtdetektor (14, 20) verbundenen Steuereinheit (22), welche dazu eingerichtet ist, auf der Grundlage von durch den Lichtdetektor (14, 20) erzeugten Detektorsignalen eine Abweichung einer Auftreffposition des Lichtflecks von einer Sollposition zu ermitteln, und die Ablenkeinheit (18) auf der Grundlage der ermittelten Abweichung derart anzusteuern, dass die Abweichung der Auftreffposition des Lichtflecks von der Sollposition kompensiert wird, wobei die Ablenkeinheit (18) ein optisches Element (30) und eine mit dem optischen Element (30) gekoppelte thermische Einrichtung umfasst, wobei die thermische Einrichtung dazu eingerichtet ist, das optische Element (30) lokal zu kühlen und/oder zu heizen, um in dem optischen Element (30) einen quer zu der Ausbreitungsrichtung des Lichtstrahls (L) verlaufenden Temperaturgradienten zu erzeugen, welcher in dem optischen Element (30) einen entsprechend verlaufenden Gradienten der optischen Weglänge, die der Lichtstrahl (L) in dem optischen Element (30) durchläuft, bewirkt, so dass sich die Ausbreitungsrichtung des Lichtstrahls (L) um ein gewünschtes Maß und/oder in eine gewünschte Richtung ändert,
**dadurch gekennzeichnet,**
**dass** das optische Element (30) als ein Array von zueinander parallel verlaufenden optischen Fasern (32) ausgebildet ist.

2. Vorrichtung nach Anspruch 1,
**dadurch gekennzeichnet,**
**dass** das optische Element (30) als optische Faserplatte ausgebildet ist.

3. Vorrichtung nach Anspruch 1 oder 2,
**dadurch gekennzeichnet,**
**dass** die thermische Einrichtung derart angesteuert wird, dass der Gradient der optischen Weglänge entlang einer Geraden verläuft, welche quer zu der Ausbreitungsrichtung des Lichtstrahls (L) verläuft.

4. Vorrichtung nach einem der vorstehenden Ansprüche,
**dadurch gekennzeichnet,**
**dass** die thermische Einrichtung mehrere thermische Elemente (34A - 34D) umfasst, welche entlang einer Umfangsfläche des optischen Elements (30) angeordnet sind.

5. Vorrichtung nach Anspruch 4,
**dadurch gekennzeichnet,**
**dass** die thermische Einrichtung wenigstens vier thermische Elemente (34A - 34D) umfasst, welche entlang der Umfangsfläche des optischen Elements (30) in Umfangsrichtung verteilt, insbesondere mit gleichen Abständen zueinander, angeordnet sind.

6. Vorrichtung nach Anspruch 4 oder 5,
**dadurch gekennzeichnet,**
**dass** zumindest ein Teil der thermischen Elemente (34A - 34D) als Heizelemente oder als Kühlelemente, insbesondere als Peltier-Elemente, ausgebildet ist.

7. Vorrichtung nach einem der vorstehenden Ansprüche,
**dadurch gekennzeichnet,**
**dass** der ortsaufgelöste Lichtdetektor (14, 20) als Vierquadrantenempfänger ausgebildet ist.

8. Vorrichtung nach einem der vorstehenden Ansprüche,
**dadurch gekennzeichnet,**
**dass** in der Ausbreitungsrichtung des Lichtstrahls (L) betrachtet hinter der Ablenkeinheit (18) ein Strahlteiler (24) vorgesehen ist, welcher einen Teil des Lichtstrahls (L) auskoppelt und auf den Lichtdetektor (20) lenkt.

9. Optische Anordnung (10, 110), umfassend
zumindest einen Lichtsender (12) zum Aussenden eines Lichtstrahls (L), zumindest einen Lichtempfänger (14) zum Empfangen des Lichtstrahls (L), und
zumindest eine Strahlnachführvorrichtung nach einem der vorstehenden Ansprüche, welche in einem Lichtlaufweg des Lichtstrahls (L) zwischen dem Lichtsender (12) und dem Lichtempfänger (14) angeordnet ist.

10. Optische Anordnung (10, 110) nach Anspruch 9,
**dadurch gekennzeichnet,**
**dass** der Lichtempfänger (14) zugleich als Lichtdetektor (20) ausgebildet ist.

11. Analysevorrichtung zum Analysieren einer Gasprobe, mit:
einer die Gasprobe aufnehmenden Konzentrationsmessstrecke,
einer optischen Anordnung (10, 110) nach Anspruch 10, wobei der Lichtsender (12) zum Aussenden des Lichtstrahls (L) in die Konzentrationsmessstrecke und der Lichtempfänger (14) zum Empfangen des aus der Konzentrationsmessstrecke austretenden Lichtstrahls (L) eingerichtet sind, und
einer Auswerteeinheit, welche dazu ausgelegt ist, auf der Grundlage der Intensität des von dem Lichtempfänger (14) empfangenen Lichtstrahls (L) und der Länge der Konzentrationsmessstrecke die Konzentration zumindest eines in der Gasprobe vorhandenen Stoffes zu ermitteln.

## Claims

1. A beam tracking apparatus for tracking a light beam (L) in an optical arrangement (10, 110), comprising
a deflection unit (18) which is configured to change the direction of propagation of the light beam (L);
a spatially resolving light detector (14, 20) for detecting at least a portion of the light beam (L); and
a control unit (22) which is connected to the deflection unit (18) and to the light detector (14, 20), which is configured to determine a deviation of a position of incidence of the light spot from a desired position on the basis of detector signals generated by the light detector (14, 20), and which is configured to control the deflection unit (18) on the basis of the determined deviation such that the deviation of the position of incidence of the light spot from the desired position is compensated,
wherein the deflection unit (18) comprises an optical element (30) and a thermal device coupled to the optical element (30), with the thermal device being configured to locally cool and/or heat the optical element (30) in order to generate a temperature gradient in the optical element (30), said temperature gradient extending transversely to the direction of propagation of the light beam (L) and effecting, in the optical element (30), a correspondingly extending gradient of the optical path length which the light beam (L) runs through in the optical element (30) so that the direction of propagation of the light beam (L) changes by a desired amount and/or in a desired direction,
**characterized in that**
the optical element (30) is configured as an array of optical fibers (32) extending in parallel with one another.

2. An apparatus in accordance with claim 1,
**characterized in that**
the optical element (30) is configured as an optical fiber plate.

3. An apparatus in accordance with claim 1 or claim 2,
**characterized in that**
the thermal device is controlled such that the gradient of the optical path length extends along a straight line which extends transversely to the direction of propagation of the light beam (L).

4. An apparatus in accordance with any one of the preceding claims,
**characterized in that**
the thermal device comprises a plurality of thermal elements (34A - 34D) which are arranged along a peripheral surface of the optical element (30).

5. An apparatus in accordance with claim 4,
**characterized in that**
the thermal device comprises at least four thermal elements (34A - 34D) which are arranged distributed along the peripheral surface of the optical element (30) in the peripheral direction, in particular at equal spacings from one another.

6. An apparatus in accordance with claim 4 or claim 5,
**characterized in that**
at least some of the thermal elements (34A - 34D) are configured as heating elements or as cooling elements, in particular as Peltier elements.

7. An apparatus in accordance with any one of the preceding claims,
**characterized in that**
the spatially resolved light detector (14, 20) is configured as a four-quadrant receiver.

8. An apparatus in accordance with any one of the preceding claims,
**characterized in that**
a beam splitter (24) is provided behind the deflection unit (18), viewed in the direction of propagation of the light beam (L), and decouples a portion of the light beam (L) and deflects it onto the light detector (20).

9. An optical arrangement (10, 110), comprising
at least one light transmitter (12) for transmitting a light beam (L);
at least one light receiver (14) for receiving the light beam (L); and
at least one beam tracking apparatus in accordance with any one of the preceding claims which is arranged in a light propagation path of the light beam (L) between the light transmitter (12) and the light receiver (14).

10. An optical arrangement (10, 110) in accordance with claim 9,
**characterized in that**
the light receiver (14) is simultaneously configured as a light detector (20).

11. An analysis apparatus for analyzing a gas sample, comprising:
a concentration measurement section which receives the gas sample;
an optical arrangement (10, 110) in accordance with claim 10, wherein the light transmitter (12) is configured to transmit the light beam (L) into the concentration measurement section and the light receiver (14) is configured to receive the light beam (L) exiting from the concentration measurement section; and
an evaluation unit which is adapted to determine the concentration of at least one substance present in the gas sample on the basis of the intensity of the light beam (L) received by the light receiver (14) and on the basis of the length of the concentration measurement section.

## Revendications

1. Dispositif de suivi de faisceau destiné à faire suivre un faisceau lumineux (L) dans un agencement optique (10, 110), comprenant
une unité de déviation (18) adaptée pour modifier la direction de propagation du faisceau lumineux (L),
un détecteur de lumière à résolution spatiale (14, 20) pour détecter au moins une partie du faisceau lumineux (L), et
une unité de commande (22) connectée à l'unité de déviation (18) et au détecteur de lumière (14, 20) et adaptée pour déterminer une déviation d'une position d'incidence de la tache lumineuse par rapport à une position de consigne sur la base des signaux de détecteur générés par le détecteur de lumière (14, 20), et pour piloter l'unité de déviation (18) sur la base de la déviation déterminée de telle sorte que la déviation de la position d'incidence de la tache lumineuse par rapport à la position de consigne soit compensée,
dans lequel
l'unité de déviation (18) comprend un élément optique (30) et un moyen thermique couplé à l'élément optique (30), le moyen thermique étant adapté pour refroidir et/ou chauffer localement l'élément optique (30) afin de générer dans l'élément optique (30) un gradient de température s'étendant transversalement à la direction de propagation du faisceau lumineux (L), qui provoque dans l'élément optique (30) un gradient correspondant de la longueur du chemin optique parcourue par le faisceau lumineux (L) dans l'élément optique (30), de sorte que la direction de propagation du faisceau lumineux (L) change d'une valeur souhaitée et/ou dans une direction souhaitée,
**caractérisé en ce que**
l'élément optique (30) est réalisé sous la forme d'un réseau de fibres optiques (32) s'étendant parallèlement les unes aux autres.

2. Dispositif selon la revendication 1,
**caractérisé en ce que**
l'élément optique (30) est réalisé sous la forme d'une plaque de fibres optique.

3. Dispositif selon la revendication 1 ou 2,
**caractérisé en ce que**
le moyen thermique est piloté de telle sorte que le gradient de la longueur du chemin optique s'étend le long d'une ligne droite qui s'étend transversalement à la direction de propagation du faisceau lumineux (L).

4. Dispositif selon l'une des revendications précédentes,
**caractérisé en ce que**
le moyen thermique comprend plusieurs éléments thermiques (34A - 34D) disposés le long d'une surface périphérique de l'élément optique (30).

5. Dispositif selon la revendication 4,
**caractérisé en ce que**
le moyen thermique comprend au moins quatre éléments thermiques (34A-34D) qui sont disposés le long de la surface périphérique de l'élément optique (30) en étant répartis dans la direction périphérique, en particulier à des distances égales les uns des autres.

6. Dispositif selon la revendication 4 ou 5,
**caractérisé en ce que**
au moins une partie des éléments thermiques (34A - 34D) sont réalisés sous forme d'éléments de chauffage ou sous forme d'éléments de refroidissement, en particulier sous forme d'éléments Peltier.

7. Dispositif selon l'une des revendications précédentes,
**caractérisé en ce que**
le détecteur de lumière à résolution spatiale (14, 20) est réalisé sous forme de récepteur à quatre quadrants.

8. Dispositif selon l'une des revendications précédentes,
**caractérisé en ce que**
un séparateur de faisceau (24) est prévu derrière l'unité de déviation (18), vu dans la direction de propagation du faisceau lumineux (L), qui extrait une partie du faisceau lumineux (L) et la dirige sur le détecteur de lumière (20).

9. Agencement optique (10, 110) comprenant
au moins un émetteur de lumière (12) pour émettre un faisceau lumineux (L),
au moins un récepteur de lumière (14) pour recevoir le faisceau lumineux (L), et
au moins un dispositif de suivi de faisceau selon l'une des revendications précédentes, qui est disposé dans un chemin de propagation de lumière du faisceau lumineux (L) entre l'émetteur de lumière (12) et le récepteur de lumière (14).

10. Agencement optique (10, 110) selon la revendication 9,
**caractérisé en ce que**
le récepteur de lumière (14) est réalisé en même temps sous forme de détecteur de lumière (20).

11. Dispositif d'analyse pour analyser un échantillon de gaz, comportant :
un trajet de mesure de concentration recevant l'échantillon de gaz,
un agencement optique (10, 110) selon la revendication 10, dans lequel l'émetteur de lumière (12) est adapté pour émettre le faisceau lumineux (L) dans le trajet de mesure de concentration, et le récepteur de lumière (14) est adapté pour recevoir le faisceau lumineux (L) sortant du trajet de mesure de concentration, et
une unité d'évaluation qui est adaptée pour déterminer la concentration d'au moins une substance présente dans l'échantillon de gaz sur la base de l'intensité du faisceau lumineux (L) reçu par le récepteur de lumière (14) et de la longueur du trajet de mesure de concentration.
